# EUROPEAN PATENT SPECIFICATION

(11) **EP 1 153 221 B1**
(45) Date of publication and mention of the grant of the patent: **12.10.2005**
(21) Application number: 00991617.2
(22) Date of filing: 20.12.2000
(51) Int. Cl.: F16B 19/10, F16B 29/00

(54) **AN ATTACHMENT SYSTEM WHICH ARE FITTING SLEEVE FOR THE SPACED ARRANGEMENT OF OBJECTS**
VERBINDUNGSSYSTEM MIT EINER HÜLSE ZUM BEABSTANDETEN HALTEN VON OBJEKTEN
SYSTEME DE FIXATION UTILISANT UN MANCHON DE FIXATION POUR AGENCER DES OBJETS DE MANIERE ESPACEE

(30) Priority: 20.12.1999 DE 19961555
(43) Date of publication of application: 14.11.2001
(73) Proprietor: SAINT-GOBAIN ISOVER, 92400 Courbevoie (FR)
(72) Inventor: MUTH, Andreas, 68239 Mannheim (DE)
(74) Representative: Herrmann-Trentepohl, Werner
(86) International application number: PCT/EP2000/013053
(87) International publication number: WO 2001/046598

(56) References cited:
- EP-A- 0 751 305
- EP-A- 0 896 110
- GB-A- 2 240 603

## Description

The invention relates to a fitting sleeve for the spaced attachment of objects and more especially of facade sheeting on wall coffers, and an attachment system using the fitting sleeve.

It is a known practice to provide the facades of industrial buildings with thermally insulated cladding essentially constituting of thermally insulating and external cladding. Since the thermally insulating materials which constitute the thermally insulating layer, are frequently not sufficiently resistant to weathering, it is necessary to provide external cladding, which is to be securely fixed to the building, and being for example in the form of trapezoidal metal sheeting. In this respect it is important for the secure attachment of such cladding that the thermally insulating material is not unduly compressed by same and the thermal insulating properties unfavorably influenced.

Such an attachment system, which has the above mentioned properties is for example disclosed in the European patent publication 0 896 106 A2. The facade cladding in accordance with the said European patent publication 0 896 106 A2 comprises wall coffers, in which the thermal insulating sheeting is laid. For holding such thermal insulating sheeting, which preferably consist of mineral wool, coffer ribs are provided, which at the ends thereof possess coffer flanges running parallel to the facade. By way of such coffer ribs and the coffer flanges the wall coffers are connected together and the thermal insulation sheeting held. The thickness of the thermal insulation boards is here larger than the length of the coffer ribs so that the external cladding in the form of trapezoidal metal sheeting is arranged at a distance from the coffer flanges in order to avoid thermal bridges. For this purpose a customized self-tapping screw is utilized, which has two thread sections and a thread-free section placed intermediately thereof. The self-tapping screws are so introduced through pre-drilled holes in the trapezoidal metal sheeting that respectively the self-tapping tip cuts its way through the coffer flanges until the front part of its thread-free section, which has a larger diameter than the first thread section, engages the coffer flange. It is in this manner that it is possible for a predetermined distance between the external cladding in the form of trapezoidal metal sheeting and coffer flanges to be set. Owing to the second thread section the trapezoidal metal sheeting is held in engagement with the screw head.

This attachment system has proved quite successful in practice, but however the customized screws are relatively expensive because of the stepped, length-adapted thread, something also applying for the sleeve.

From GB 2 240 603 A a blind rivet nut is known which includes a resilient body in which a secured metallic-threaded element engageable by a bolt to forma head so as to secure two members together. Further, a distant sleeve is provided in the resilient body between the threaded element and the opening to prevent excessive deformation of the resilient body. While the blind rivet nut described in GB 2 240 603 A is able to connect two members with access to the members from only one side, this blind rivet nut is not able to attach objects with the objects being spaced apart to each other.

Accordingly one aim of the invention is to provide a fitting sleeve and an attachment system which is simpler in structure and accordingly lower in price than the initially mentioned attachment system, a predetermined spacing of the arrangement of at least two objects having to be provided for.

This aim is to be achieved in accordance with the invention by the structures with the features of claim 1 and, respectively, 7. Advantageous further developments are defined in the dependent claims.

The present invention is based on the recognition that for an attachment system for the spaced arrangement of objects, in the case of which access is frequently only possible from one side, it is also possible to provide only one single opening for receiving attachment means on the external one of the objects to the attached, a design is advantageous, in the case of which although the individual functions of attachment of two objects and holding of the objects at a distance apart is by a one system, it is however by separate structure parts. Accordingly in keeping with the invention a fitting sleeve is provided, which is constituted by a preferably cylindrical sleeve section and an abutment element arranged in this sleeve section. This means that each system part is comparatively simple in structure and in case of need standard components may be utilized so that expensive customized designs are unnecessary.

In this respect a first object to be secured is held by way of a locking means, provided on the sleeve section, between the abutment element and the locking means, a second object, to be secured at a distance, being arranged at the other end of the sleeve section, which is opposite to abutment element. This means that the fitting sleeve is so inserted through a prepared hole in the first object to be secured that it engages the abutment element. The second object to be secured at a distance from the first object is then in engagement with the other end of the fitting sleeve. The attachment of the two spaced apart objects is then accomplished using a screw element, which is inserted through the fitting sleeve and is screwed to the object to be secured at a distance from the first object is then in engagement with the other end of the fitting sleeve. The attachment of the two spaced apart objects is then accomplished using a screw element, which is inserted through the fitting sleeve and is screwed to the object, which is located at the end opposite to the abutment element.

It is an advantage in this respect that two simple and inexpensive and furthermore multipurpose components are combined as one attachment system. The individual parts, namely the fitting sleeve and the screw element do not in this respect have to be exactly adapted to certain situations, and in fact permit a large range of application with variations and changes in dimensions.

Preferably, the screw element is a self-tapping screw so that it is possible to do without any nut or structure to be secured on a thread.

The locking means for setting the object to be secured abutting the abutment element may, in the case of a preferred embodiment, be constituted by one or more elastically deforming detent elements, which extend radially outward from the sleeve section of the fitting sleeve and accordingly secure in place the object to be secured between the abutment element and the detent element. Such an elastically deforming detent element is comparable with a barbed hook, since the detent element is elastically deformed or, respectively, compressed on introduction of the fitting sleeve into the opening in the object to be secured, while a withdrawal of the fitting sleeve from the opening after elastic relaxation of the detent element is possible only with difficulty or breakage of the fitting sleeve. Preferably, the detent element or elements are constituted by a detent rail set at an angle to the sleeve section, such rail being pivoted at one end integrally on the sleeve section.

In the case of another preferred embodiment the locking means may be formed by an elastically and/or plastically deforming compression zone which on tightening the screw element and thrusting the fitting sleeve against the second object to be secured so deforms that a collar is formed extending radially outward from the sleeve section, between which and the abutment element of the fitting sleeve the first object to be secured is fixed.

An elastic and/or plastic deformation of a compression zone may be achieved by the provision of a plurality of compressible ribs distributed around the periphery of the fitting sleeve, such ribs extending parallel to the longitudinal axis of the sleeve and being separated apart by slits, in a limited portion of the sleeve section so that such sleeve section portion is preferentially deformed on loading by the screw element. Such a preferred deformation may also be produced by having a reduced thickness of the sleeve body in this portion or by the use of another material with less rigidity. Preferably the compressible ribs are outwardly convex and more particularly angled in the form of letter V, something which is advantageous for the application of a force for predetermined deformation of the compression zone.

Furthermore it would be feasible as well to have a combination of elastically, resilient detent elements and a compressible zone as a locking means. This could for example be realized by having ribs formed adjacent to the sleeve section and in the vicinity of the abutment, such ribs being arranged spaced out about the periphery and separated from each other by slits. These ribs may moreover be made with a thickness less than the thickness of the remaining sleeve section. Furthermore it would be possible for the ribs to be curved so as to protrude outwardly, for instance by having parts thereof set at an angle to one another so that such ribs projecting slightly outward will be elastically deformable and act as a sort of detent element. This means that a part to be attached would already have a prefitting character or form. The final fixation in place is then brought about by expanding the fitting sleeve and deformation of the ribs in an outward direction. The fitting sleeve is preferably manufactured of plastic, although it may be made of any other suitable and more especially of metal.

The above described locking means ensure an economic and reliable attachment of the object on the abutment element, and variations in dimensions, for example as regards the diameter of the opening and changes in the distance between the parts to be attached may be readily allowed for.

The fitting sleeve is preferably made of metal or plastic or a combination of such materials. The manufacture of the fitting sleeve of plastic does offer the advantage that in the case of applications for thermal insulation purposes there will be an improved thermal insulating effect, since no cold bridges are formed, as might be the case with a fitting sleeve of metal.

Further advantages, characteristics and features of the invention will be comprehended from the following detailed description of working embodiments with reference to the accompanying drawings.
- Figure 1: is a partial cross section in side elevation of an embodiment of the fitting sleeve in accordance with the invention with an inserted self-tapping screw for screwing metal facade sheeting to, and at a distance from, flanges of a wall coffer, the condition before final tightening up of the screw and expanding the fitting sleeve being indicated.
- Figure 2: shows a cross section taken through an embodiment of the fitting sleeve of the invention.
- Figure 3a: shows a side view of a furthermore embodiment of the fitting sleeve of the invention.
- Figure 3b: shows a lateral elevation thereof.
- Figure 4: shows the attachment of an external cladding element on a wall coffer in cross section.

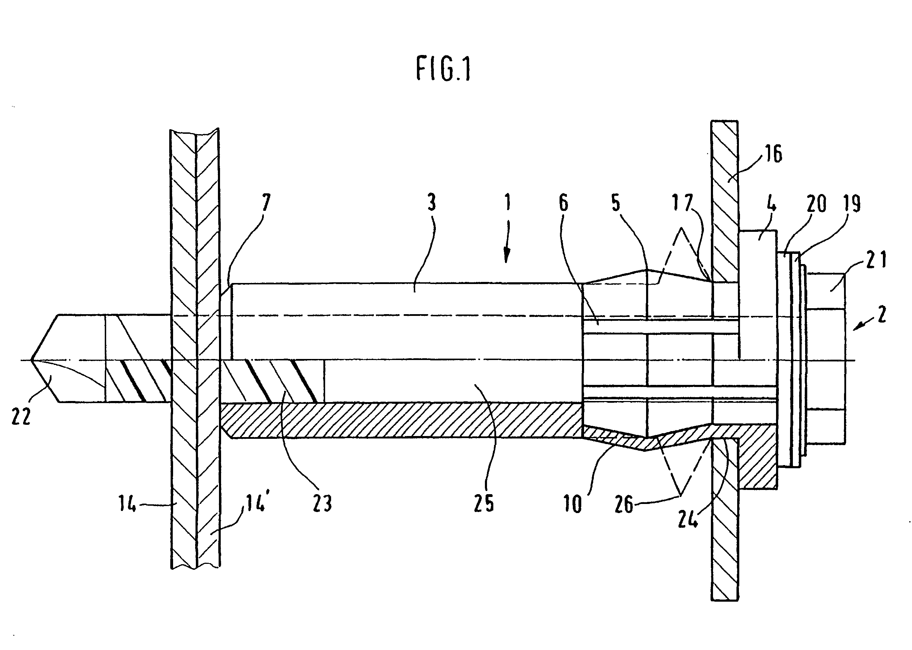

Figure 1 is a side elevation and partial section of an attachment system comprises a fitting sleeve 1 with a self-tapping screw 2. In this case the fitting sleeve 1 is so placed between the objects 14 and 14 ' and furthermore 16, which are to be attached spaced apart, that is to say in the illustrated working embodiment, the superposed flanges 14 and 14' of adjacent wall coffers and the metal trapezoidal metal sheeting 16 that the cylindrical sleeve section 3 is inserted into a hole 17 in the facade sheeting 16 so that an abutment element 4 of the fitting 1, which is arranged at the one end of the sleeve section 3, in the form of a ring, engages the facade sheeting 16. Moreover, the other end 7 of the sleeve section 3, which is opposite to the abutment element 4, engages the coffer flanges 14 and 14'. A self-tapping screw 2 is inserted into the fitting sleeve 1 and its tip 22 makes its way through the coffer flanges 14 and 14'. This means that the screw head 21 comes into engagement with the abutment element 4 of the fitting sleeve 1, a washer 19 and a rubber seal 20 preferably being provided between the abutment element 4 and the screw head 21, it being preferred for the washer to be permanently attached to the rubber seal.

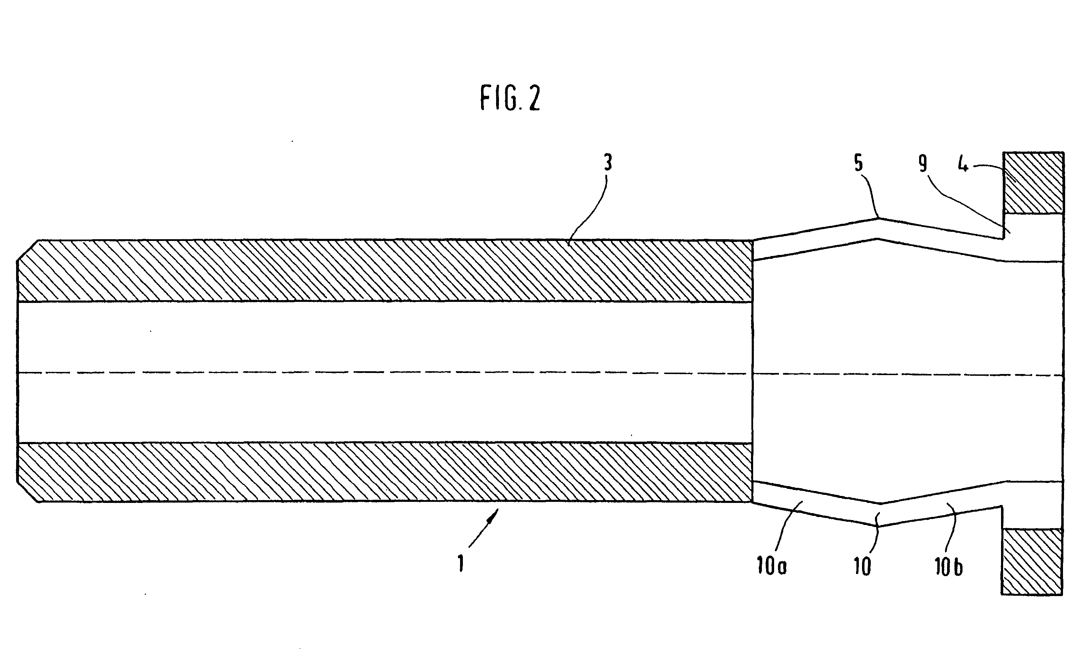

As will be more clearly in figure 2 adjacent to the abutment element 4, the fitting sleeve 1 of the invention possesses a deforming expanding zone 5 on the sleeve section 3, such zone being constituted by ribs 10 spaced from one another in the peripheral direction, the individual ribs 10 being separated from one another by slits 6. In the working embodiment illustrated the ribs 10 have a thickness which is substantially less than the thickness of the remaining sleeve section 3. Furthermore, the ribs 10 are designed so as to protrude slightly radially outward, this being achieved in the illustrated working example by two rib portions 10a and 10b set at an angle to one another. The ribs 10 are in this case elastically designed so that the ribs 10 may be slightly and reversibly thrust inward on insertion of the fitting sleeve 1 in the opening 17 in the facade sheeting 16, since the diameter of the sleeve section 3 is preferably matched to the diameter of the opening 17. The elastic design of the ribs 19 means in this embodiment of the fitting sleeve 1 that a prefixing or tacking operation on the facade sheeting 16 is performed. Preferably a separately formed receiving portion 24 is provided - see figure 1 - between the ribs 10 and, respectively, the deforming expanding zone 5 and the abutment element 4.

Furthermore it will be seen from figure 2 that the slits 6 between the ribs 10 may be continued right into the abutment element 4, so that recesses 9 in the abutment element 4 are produced, which in the case of a plastic design facilitate demolding during manufacture of the sleeve. In the working embodiment illustrated six or eight slits in all are provided distributed about the periphery, it however naturally being possible to have any other suitable number of slits.

If the attachment system depicted in figure 1 is so moved into the final attachment condition by further tightening the self-tapping screw 2, the thread 23 of the screw shank 25 being further moved into the coffer flanges 14 and 14' so that the fitting sleeve 1 will be further thrust against the coffer flanges 14 and 14' and the expanding zone 5 starts to deform so that the ribs 10 are bent outward. As a result the ribs 10 develop a collar 26, which is indicated in chained lines in figure 1. After the maximum possible deformation or diameter of the expanding zone 5 has been attained or a selected torque applied, the desired spaced arrangement of the coffer flanges 14 and 14' and the facade sheeting 16 is complete. The facade sheeting 16 is now located between the abutment element 4 and the collar 26 formed so that it is set in position. The distance of the facade sheeting 16 from the coffer flanges 14 and 14' is defined by the sleeve section 3, which has its end 7 engaging the coffer flange 14 and 14". The thread 23 of the self-tapping screw 2 holds the coffer flanges 14 and 14' against the sleeve section 3.

Figure 3a shows a further embodiment of the fitting sleeve 1 in accordance with the invention, in the case of however instead of an expanding zone 5 on the sleeve section 3 an elastically deforming detent element 8 is provided. This detent element 8 is designed as a resilient barbed hook so that the fitting sleeve 1 may be introduced into an opening 17 in facade sheeting 16 as in the arrangement of figure 1, the elastic detent element 8 deforming and giving away on introduction into the opening 17. After introduction of the fitting sleeve 1 into the opening 17, i. e. when the abutment element 4 engages the facade sheeting 16, the elastic detent element 8 will jerk back into its previous position and so prevent the fitting sleeve 1 being able to be withdrawn from the opening 17 again. The facade sheeting 16 is thus fully positioned by the introduction of the fitting sleeve 1 in a receiving portion 24 between the abutment element 4 and the elastic detent element 8.

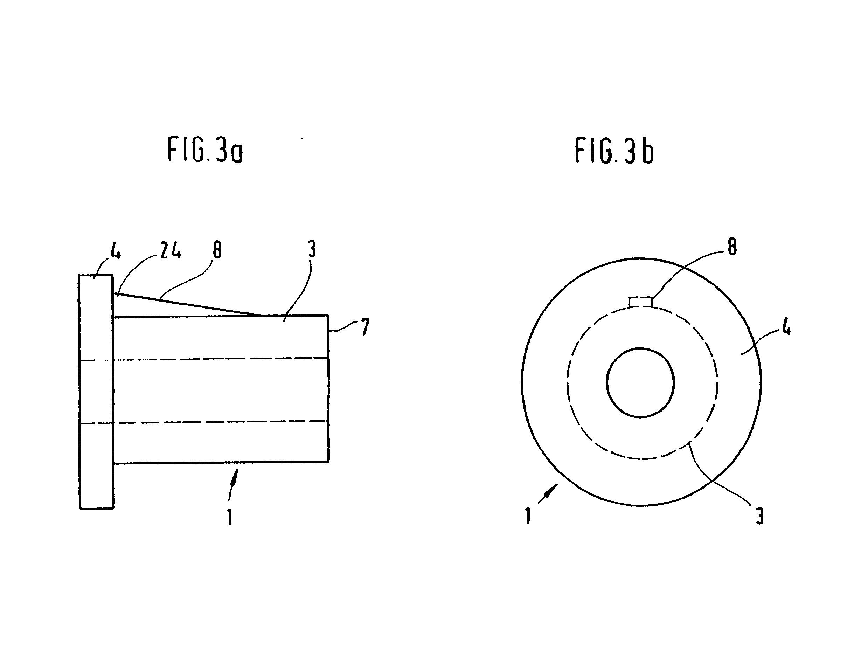

Figure 3b shows that only one elastic detent element 8 is provided on the periphery of the sleeve section 3. Naturally more detent elements 8 can be installed.

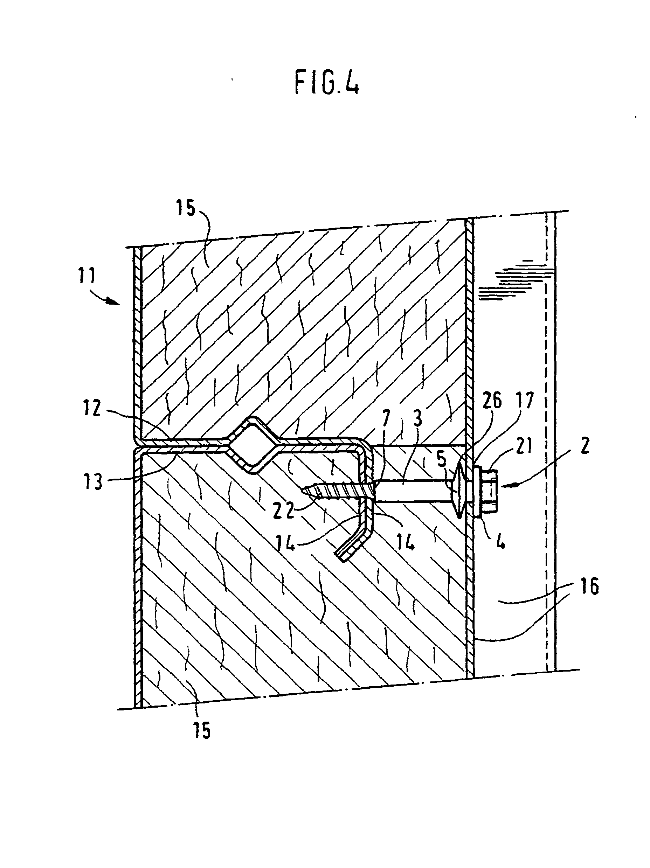

In the working embodiment illustrated in figure 4, in the case of which an elastic detent element 8 is provided on the sleeve section 3 instead of an expanding zone 3, the final state of the attachment arrangement or system is again attained by introducing a self-tapping screw 2 right through the sleeve 1, the screw tip 22 again making its way through the coffer flanges 14 and 14' to be arranged at a distance from the facade sheeting 16 so far that the end 7 of the fitting sleeve 7 engages the coffer flanges 14 and 14' and the screw head 21 engages the abutment element 4.

Figure 4 illustrates the embodiment of the attachement system as in figure 1 designed for the attachment of trapezoidal metal sheeting 16 on adjacent wall coffers 11. The wall coffers 11 have ribs 12 and 13 which abut each other and at their ends merge into coffer flanges 14 and 14', which are parallel to the facade face. At a distance from the coffer flanges 14 and 14' the trapezoidal metal sheeting 16 is arranged on the wall coffers 11 so that insulating elements 15 may be received, which preferably consist of glass or rock wool. The attachment system of the invention comprising fitting sleeves 1 and self-tapping screws 2 is so employed that the fitting sleeve 1 is slipped through a hole 17 in the trapezoidal metal sheeting 16 and the abutment element 4 of the fitting sleeve 1 assumes a position on the outer side of the trapezoidal metal sheeting 16. A self-tapping screw 2 is now inserted through the fitting sleeve 1 and screwed into the coffer flanges 14 and 14'. The self-tapping screw 2 is tightened until the fitting sleeve 1 has its free end 7 in engagement with the coffer flange 14'. By further tightening of the self-tapping screw 2 the fitting sleeve 1 is deformed in the expanding zone 5 so that a radially outwardly protruding collar 26 is formed, which at the same time fixes the trapezoidal metal sheeting between the abutment element 4 and the collar 26. When the maximum expanding of the expanding zone 5 has been achieved, the desired attachment of the trapezoidal metal sheeting 16 in spaced relationship to the coffer flanges 14 and 14' is completed, and the length of the sleeve section 3 between the abutment element 4 and the free end 7 of the fitting sleeve 1 sets the distance between the coffer flanges 14 and 14' and the trapezoidal metal sheeting 15.

## Claims

1. A fitting sleeve (1) for the spaced apart attachment of objects (14, 16), more particularly external cladding elements (16) on wall coffers (11), which possess insulating material elements between projecting coffer ribs, comprising an abutment element (4) with its sleeve hole is designed for receiving an attachment element (2), more particularly a screw element (2), and is provided with a locking means (5, 8) on a sleeve section (3) adjacent to the abutment element (4), which is able to be so widened for the attachment of the part (16) or external cladding element to be attached that the part (16) or external cladding element to be attached is held between the abutment element (4) and the locking means (5, 8), **characterized in that** the length of the fitting sleeve (1) between the abutment element (4) and the end (7) opposite to the abutment element (4), matches the predetermined fitting spacing of the objects to be attached.

2. The fitting sleeve as set forth in claim 1, **characterized in that** the locking means (5, 8) is constituted by one or more elastically deforming detent elements (8) which protrude from the sleeve section (3), preferably formed as a detent rail projecting at an angle from the sleeve section (3), such rail because pivoted at one end integrally on the sleeve section (3).

3. The fitting sleeve as set forth in claim 1, **characterized in that** the locking means (5, 8) is constituted by an expanding zone (5).

4. The fitting sleeve as set forth in claim 3, **characterized** that expandable ribs (10) are distributed about the periphery of the expanding zone (5), such ribs widening on expanding to form the locking means (5, 8).

5. The fitting sleeve as set forth in any one of the preceding claims, **characterized in that** the locking means (5, 8) is constituted by a plurality of radially outwardly extending ribs (8) spaced apart from each other in the peripheral direction.

6. The fitting sleeve as set forth in any one of the preceding claims, **characterized in that** the fitting sleeve (1) is manufactured of metal and/or plastic.

7. An attachment system for the spaced attachment of objects (14, 16), more particularly external cladding elements (16) on wall coffers (11), which between projecting coffer ribs (12, 13) with coffer flanges (14, 14') have insulating material elements (15), preferably of glass or rock wool, comprising a fitting sleeve according to any of the proceeding claims and a screw element (2) penetrating into the insulating material elements and adapted to be screwed in the wall coffer (11) and holding the abutment element (4) of the fitting sleeve (1) on the external cladding element (16), the screw element (2) being so inserted that the screw element (2) has its screw part (22, 23) projecting from the fitting sleeve (1) screwed to the wall coffer (11) and the screw head (21) positions the end (7), which is opposite to the abutment element (4) of the fitting sleeve (1) on the coffer flanges (14, 14').

8. The attachment system as set forth in claim 7, **characterized in that** in addition to a first receiving portion (24) for receiving a first object (16) to be attached, more particularly an external cladding element, between the locking means (5 and 8) and the abutment element (4) a second receiving portion for receiving a second object (14, 14'), more particularly coffers (1), whose distance from the first one of the objects to be attached is to be set at a predetermined value, is provided at the end (7), opposite to the abutment element (4), of the fitting sleeve (1), the screw element (2) holding the second object (14, 14') or the wall coffer (11) on the end (7), opposite to the abutment element (4) of the fitting sleeve.

9. The attachment system as set forth in any one of the claims 7 or 8, **characterized in that** the locking means (5) of the fitting sleeve (1) is formed by expanding the fitting sleeve (1) on tightening up the attachment system by a projection or collar (26) formed by elastic and/or plastic deformation.

10. The attachment system as set forth in any one of the claims 8 to 9, **characterized in that** the screw element (2) is a self-tapping screw.

## Patentansprüche

1. Montagehülse (1) zum beabstandeten Befestigen von Gegenständen (14, 16), insbesondere von Aussenverschalungselementen (16) an Wandkassetten (11), welche Dämmstoffelemente aufweisen zwischen vorstehenden Kassettenstegen, die ein Anschlagelement (4) umfassen, wobei die Hülsenbohrung zur Aufnahme eines Befestigungselements (2), insbesondere ein Schraubelement (2), ausgelegt ist und mit einer Sperreinrichtung (5, 8) an einem Hülsenabschnitt (3) benachbart zu dem Anschlagelement (4) versehen ist, welches zur Festlegung des zu befestigenden Teils (16) oder des Außenverschalungselements aufweitbar ist, derart, dass das Teil (16) oder das Außenverschalungselement zwischen Anschlagelement (4) und Sperreinrichtung (5, 8) gehalten ist,
**dadurch gekennzeichnet, dass**
die Länge der Montagehülse (1) zwischen Anschlagelement (4) und dem dem Anschlagelement (4) gegenüberliegenden Ende (7) auf den vorbestimmten Montageabstand der zu befestigenden Gegenstände abgestimmt ist.

2. Montagehülse nach Anspruch 1,
**dadurch gekennzeichnet, dass**
die Sperreinrichtung (5, 8) durch einen oder mehrere durch außen vom Hülsenabschnitt (3) vorstehende, elastische verformbare Rastelemente (8) gebildet ist, vorzugsweise als unter einem Winkel vom Hülsenabschnitt (3) vorstehende Rastleiste, die einstückig am Hülsenabschnitt (3) angelenkt ist.

3. Montagehülse nach Anspruch 1,
**dadurch gekennzeichnet, dass**
die Sperreinrichtung (5, 8) durch eine Stauchzone (5) gebildet ist.

4. Montagehülse nach Anspruch 3,
**dadurch gekennzeichnet, dass**
Stauchrippen (10) über den Umfang der Stauchzone (5) verteilt sind, die sich beim Stauchen zur Bildung der Sperreinrichtung (5, 8) aufweiten.

5. Montagehülse nach einem der vorhergehenden Ansprüche,
**dadurch gekennzeichnet, dass**
die Sperreinrichtung (5, 8) durch mehrere, radial nach außen hervorstehende und voneinander in Umfangsrichtung beabstandete Stege (8) ausgebildet ist.

6. Montagehülse nach einem der vorhergehenden Ansprüche,
**dadurch gekennzeichnet, dass**
die Montagehülse (1) aus Metall und/oder Kunststoff hergestellt ist.

7. Befestigungssystem zum beabstandeten Befestigen von Gegenständen (14, 16), insbesondere von Außenverschalungselementen (16) an Wandkassetten (11), die zwischen vorstehenden Kassettenstegen (12, 13) mit Kassettenflanschen (14, 14') Dämmstoffelemente (15), vorzugsweise aus Glas- oder Steinwolle, aufweisen, und eine Montagehülse nach einem der vorhergehenden Ansprüche und einem die Dämmstoffelemente durchdringenden und in die Wandkassette (11) verschraubbaren und das Anschlagelement (4) der Montagehülse (1) gegen das Außenverschalungselement (16) haltenden Schraubelement (2), wobei das Schraubelement (2) derart steckbar ist, dass das Schraubelement (2) mit seinem aus der Montagehülse (1) vorstehenden Schraubteil (22, 23) mit der Wandkassette (11) verschraubbar ist und dabei mit seinem Schraubkopf (21) das dem Anschlagelement (4) gegenüberliegende Ende (7) der Montagehülse (1) gegen die Kassettenflansche (14, 14') setzt.

8. Befestigungssystem nach Anspruch 7,
**dadurch gekennzeichnet, dass**
neben einem ersten Aufnahmebereich (24) zur Aufnahme eines ersten zu befestigenden Gegenstandes (16), insbesondere ein Außenverschalungselement, zwischen Sperreinrichtung (5, 8) und Anschlagelement (4) ein zweiter Aufnahmebereich zur Aufnahme eines zweiten Gegenstandes (14, 14'), insbesondere von Wandkassetten (11), deren Abstand zum ersten der zu befestigenden Gegenstände auf ein vorbestimmtes Mass gehalten werden soll, an dem den Anschlagelement (4) gegenüberliegenden Ende (7) der Montagehülse (1) vorgesehen ist, wobei das Schraubelement (2) den zweiten zu befestigenden Gegenstand (14, 14') oder die Wandkassette (11) gegen das dem Anschlagelement (4) gegenüberliegenden Ende (7) der Montagehülse setzt.

9. Befestigungssystem nach einem der Ansprüche 7 oder 8,
**dadurch gekennzeichnet, dass**
die Sperreinrichtung (5) der Montagehülse (1) durch Stauchen der Montagehülse (1) beim Festziehen des Befestigungssystems durch einen durch elastische und/oder plastische Verformung gebildeten Vorsprung oder Kragen (26) gebildet ist.

10. Befestigungssystem nach einem der Ansprüche 8 bis 9,
**dadurch gekennzeichnet, dass**
das Schraubelement (2) eine selbstschneidende Schraube ist.

## Revendications

1. Manchon d'ajustement (1) destinés à la fixation séparée d'objets (14, 16), plus particulièrement, d'éléments de placage externes (16) sur des caissons de paroi (11), lequel possède des éléments en matériau isolant entre les nervures de caisson en saillie, comprenant un élément de butée (4) avec son alésage de manchon qui est conçu pour recevoir un élément de fixation (2), plus particulièrement un élément de vis (2), et est pourvu de moyens de verrouillage (5, 8) sur une section de manchon (3) adjacente à l'élément de butée (4), lequel est capable d'être ainsi élargi pour la fixation de la partie (16) ou de l'élément de placage externe à fixer, laquelle partie (16) ou lequel élément de placage externe à fixer est maintenu(e) entre l'élément de butée (4) et les moyens de verrouillage (5, 8), **caractérisé en ce que** la longueur du manchon d'ajustement (1) entre l'élément de butée (4) et l'extrémité (7) opposée à l'élément de butée (4) coïncide avec l'espacement d'ajustement prédéterminé des objets à fixer.

2. Manchon d'ajustement selon la revendication 1, **caractérisé en ce que** les moyens de verrouillage (5, 8) sont constitués par un ou plusieurs éléments de positionnement se déformant élastiquement (8) qui font saillie à partir de la section de manchon (3), de préférence formés comme rail de positionnement s'avançant suivant un angle à partir de la section de manchon (3), ce rail étant pivotant intégralement sur la section de manchon (3) au niveau d'une extrémité.

3. Manchon d'ajustement selon la revendication 1, **caractérisé en ce que** les moyens de verrouillage (5, 8) sont constitués par une zone d'expansion (5).

4. Manchon d'ajustement selon la revendication 3, **caractérisé en ce que** des nervures extensibles (10) sont réparties autour de la périphérie de la zone d'expansion (5), ces nervures s'élargissant en expansion pour former les moyens de verrouillage (5, 8).

5. Manchon d'ajustement selon l'une quelconque des revendications précédentes, **caractérisé en ce que** les moyens de verrouillage (5, 8) sont constitués d'une pluralité de nervures s'étendant radialement vers l'extérieur (8) à distance l'une de l'autre dans la direction périphérique.

6. Manchon d'ajustement selon l'une quelconque des revendications précédentes, **caractérisé en ce que** le manchon d'ajustement (1) est fabriqué en métal et/ou en matière plastique.

7. Système de fixation destiné à la fixation séparée d'objets (14, 16), plus particulièrement d'éléments de placage externes (16) sur des caissons de paroi (11), lesquels entre les nervures de caisson en saillie (12, 13) présentant des rebords de caisson (14, 14') comportent des éléments de matériau isolant (15), de préférence du verre ou de la laine de roche, comprenant un manchon d'ajustement selon l'une quelconque des revendications précédentes et un élément de vis (2) pénétrant dans les éléments de matériau isolant et adapté pour être vissé dans le caisson de paroi (11) et maintenant l'élément de butée (4) du manchon d'ajustement (1) sur l'élément de placage externe (16), l'élément de vis (2) étant inséré de sorte que l'élément de vis (2) présente sa partie de vis (22, 23) s'avançant à partir du manchon d'ajustement (1) vissée au caisson de paroi (11) et que la tête de vis (21) positionne l'extrémité (7) qui est opposée à l'élément de butée (4) du manchon d'ajustement (1) sur les rebords du caisson (14, 14').

8. Système de fixation selon la revendication 7, **caractérisé en ce qu'**en plus d'une première partie de réception (24) destinée à recevoir un premier objet (16) à fixer, plus particulièrement un élément de placage externe, entre les moyens de verrouillage (5,8) et l'élément de butée (4), une seconde partie de réception destinée à recevoir un second objet (14, 14'), plus particulièrement des caissons (1), dont la distance à partir du premier des objets à fixer doit être établie au niveau d'une valeur prédéterminée, est pourvue au niveau de l'extrémité (7) opposée à l'élément de butée (4), du manchon d'ajustement (1), l'élément de vis (2) maintenant le second objet (14, 14') ou le caisson de paroi (11) sur l'extrémité (7) opposée à l'élément de butée (4) du manchon d'ajustement.

9. Système de fixation selon l'une quelconque des revendications 7 ou 8, **caractérisé en ce que** les moyens de verrouillage (5) du manchon d'ajustement (1) sont formés par expansion du manchon d'ajustement (1) lors du serrage du système de fixation à l'aide d'une partie en saillie ou d'un collier (26) formé(e) par une déformation élastique et/ou plastique.

10. Système de fixation selon l'une quelconque des revendications 8 à 9, **caractérisé en ce que** l'élément de vis (2) est une vis auto-taraudeuse.
